# EUROPÄISCHE PATENTANMELDUNG

(11) **EP 0 762 584 A1**
(43) Veröffentlichungstag der Anmeldung: **12.03.1997**
(21) Anmeldenummer: 96113247.9
(22) Anmeldetag: 19.08.1996
(51) Int. Cl.: H02B 1/30, H05K 7/18

(54) **Elektrischer Schaltschrank in Modulbauweise**

(30) Priorität: 28.08.1995 DE 19531573
(71) Anmelder: EAN Elektro-Anlagen Neukirchen GmbH, 04552 Neukirchen (DE)
(72) Erfinder: Jakobi, Josef, 04552 Neukirchen (DE)

(57) **Zusammenfassung**

Elektrischer Schaltschrank in Modulbauweise, dessen Leistungsbaugruppen durch in Serienfertigung hergestellte Modulplatten gebildet werden. Die einzelnen Modulplatten wurden dabei in der Weise in ihren Abmessungen minimiert und genormt, daß dieselben jeweils einem vorbestimmten Verwendungszweck zugeordnet wurden. Vertikal verlaufend ist neben den Modulplatten eine Sammelschienenführung angeordnet, über die die Zuführung der elektrischen Leistung erfolgt. Die einzelnen Module sind ihrerseits, den Kontakt zur technologischen Software herstellend, über eine Zwei-Draht-Leitung miteinander verbunden.

## Beschreibung

Die Erfindung wird angewendet auf dem Gebiet der elektrischen Schaltanlagen und dabei insbesondere beim Bau und bei der Montage elektrischer Schaltschränke.
Das Ziel der Erfindung ist die Verringerung des Montageaufwandes für elektrische Schaltschränke die Verringerung der Montagezeit, die Einsparung von Arbeitskräften sowie die Vereinfachung der Fehlersuche, Fehlerdiagnostik und Fehlerbeseitigung nach Inbetriebnahme des Schaltschrankes. Ein weiteres Ziel der Erfindung ist die Einsparung der in den Schaltschränken bisheriger Bauart üblicherweise erforderlichen Hilfsbaugruppen.

Bekannt ist der Schaltanlagenbau konventioneller Art, dessen Wesensmerkmal darin besteht, daß für jede individuelle Lösung der Meß-, Steuer- und Regelungstechnik ein jeweils objektspezifischer, separater Schaltschrank entwickelt und montiert wird. Damit verbunden ist ein relativ hoher Aufwand, betreffend Kalkulation, Projektierung, Bau und Montage des jeweiligen Schaltschrankes.

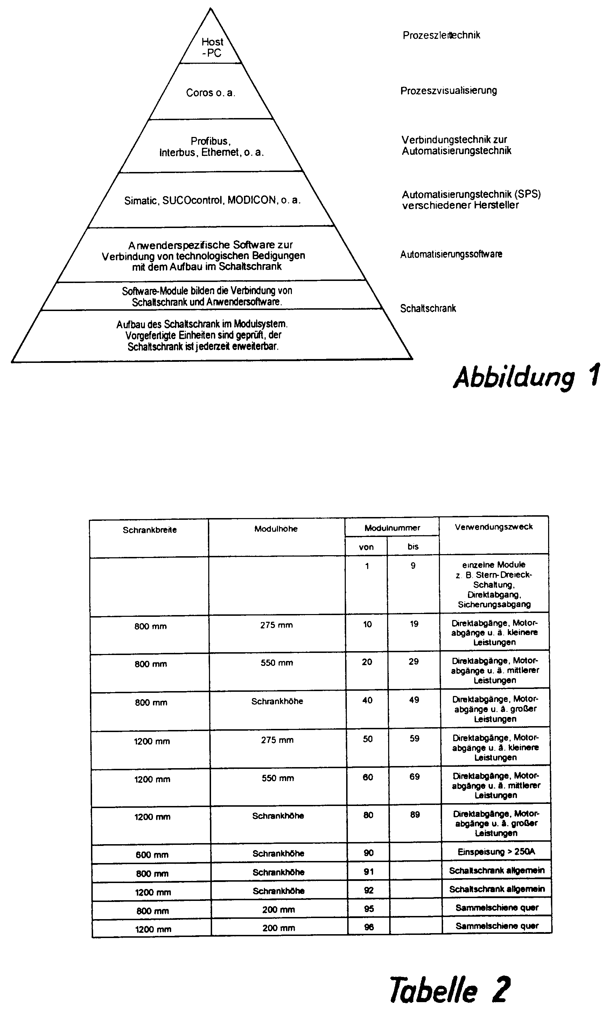

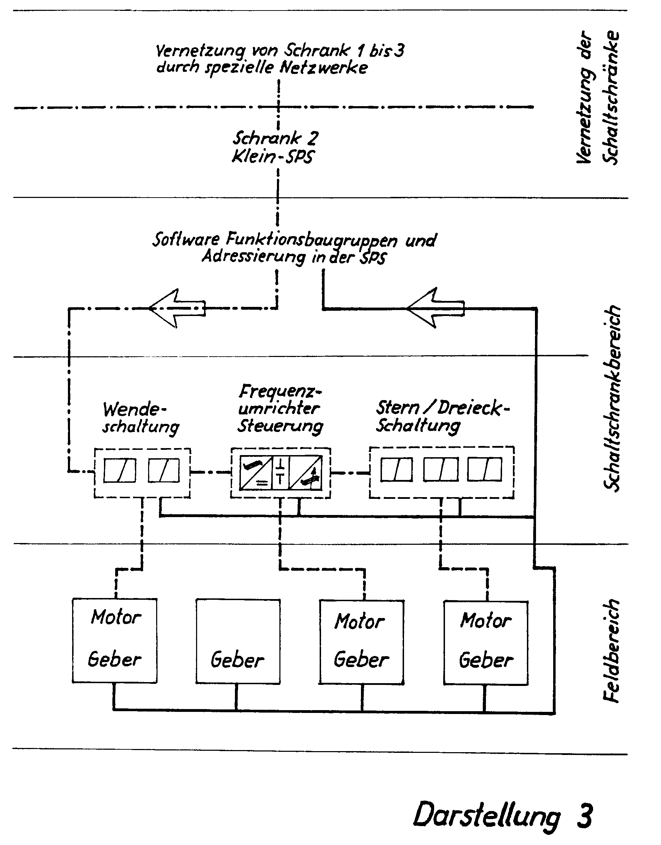

Das Wesen der Erfindung besteht nun darin, daß die in den geschalteten Leistungsabgängen mehrerer Schaltschränke auftretende Analogie zur Standardisierung geführt wird, wodurch eine die Erreichung der Ziele der Erfindung gewährleistende Serienfertigung möglich wird.
Erfindungswesentlich dabei ist, daß neben den eigentlichen Leistungsbausteinen, die die bestimmenden Elementen im Schaltschrank ausmachen, auch eine Reihe gewisse Abhängigkeiten, Zuordnungen und Funktionen erfüllende Hilfsbaugruppen, beispielsweise Relais, Zeitglieder und Hilfsschalter in den standardisierten Software-Modul integriert werden.
Erreicht wird dies erfindungsgemäß dadurch, daß die den Grundkörper eines Schaltschrankes bildende Montageplatte so verkleinert wird, daß eine kostengünstige Vorfertigung und damit eine Serienfertigung überhaupt erst möglich wird.
Den auf diese Weise kostengünstig hergestellten Montageplatten wurden alsdann gemäß ihres vorgesehenen Verwendungszweckes Modulnummern zugeordnet, wobei einzelne zusammenhängende Modulnummern wiederum zu standardisierten und zweckmäßig gestuften Modulhöhen zusammengefaßt wurde. Erfindungswesentlich ist ebenfalls, daß die Vielzahl der bisherigen Schrankbreiten, unabhängig vom jeweiligen Höhen- und Tiefenmaß des Schrankes, auf einige genormter Breitenmaße reduziert wurde.
Die Zuführung der elektrischen Leistungen zu den einzelnen auf der Montageplatte angeordneten Modulen erfolgt über eine vertikal verlaufende Sammelschienenführung, mit maximal 250 A pro Feld.
Die waagerechte Sammelschienenführung ihrerseits wurde entsprechend den Bedürfnissen gestuft (250A, 400A, 630A, usw.)
Erfindungswesentlich ist weiterhin, daß nach Festlegung dieser Standards eine Lösung möglich wurde, bei der auf intelligente Weise die einzelnen Module über eine Zwei-Draht-Leitung verbunden sind und somit der Kontakt zur technologischen Software hergestellt ist.
Erfindungswesentlich ist schließlich, daß das auf diese Weise entwickelte Modulsystem durch die bereits auf dem Markt befindlichen Feldbus-Systeme (beispielsweise Interbus-S, CAN-BUS, ASI-BUS, usw.) ergänzt werden kann, wodurch dem Kunden alle Freiheiten bei der Auswahl der Hardwaresysteme erhalten bleiben.
Die Wirkungen des in erfinderischer Weise gefundenen elektrischen Schaltschrankes in Modulbauweise stellen sich technologisch/schematisch, wie in Abbildung 1 gezeigt, dar.

Nachfolgend soll die Erfindung an einer Reihe von Ausführungsbeispielen näher erläutert werden:

Tabelle 2 zeigt ein Beispiel für die Möglichkeiten der Zuordnung verschiedener, standardisierter Modulhöhen zu mehreren, ebenfalls genormten Schaltschrankbreiten sowie eine daraus ableitbare nummernmäßige Kennzeichnung einzelner Module und deren möglicher Verwendungszweck.

Darstellung 3 zeigt das Schema der Vernetzung eines erfindungsgemäßen, hier im Beispiel als Schrank 2 bezeichneten, elektrischen Schaltschrankes, wobei die einzelnen Linienarten folgenden Datenfluß wiedergeben:
- dicke Vollinie: Datenfluß für Sensoren
- dicke Strichlinie: Datenfluß für Aktoren
- dicke Strich-Punkt-Linie: geschaltete Leistung.

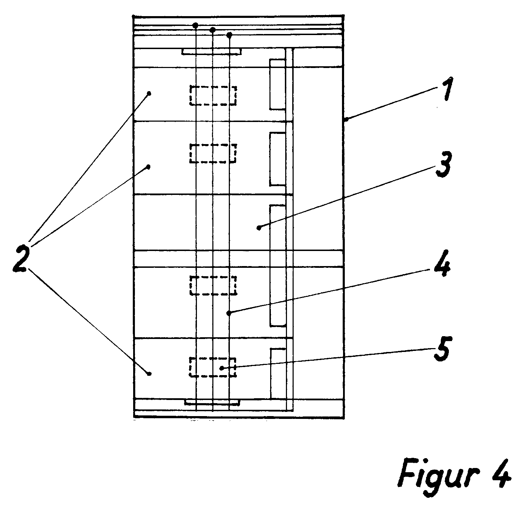

Figur 4 zeigt den Aufbau eines erfindungsgemäßen Schaltschrankes der Nennbreite 800 Millimeter in Modulbauweise, vorgesehen als Steuereinrichtung für eine Wasseraufbereitungsanlage, bestehend aus dem Gehäuse 1, in welchem die Anzahl von drei Exemplaren eines Moduls 2 der Größe 10 sowie ein Exemplar eines Moduls 3 der Größe 20 angeordnet sind. Längs der Module 2,3 ist vertikal eine Sammelschiene 4 mit einem Sammelschienenstrom von 250 A angeordnet, von der 2,3 die elektrische Leistung zugeführt wird. Die Module 2,3 ihrerseits sind jeweils über eine Zweidrahtleitung mit der technologischen Software verbunden. Ein jeder der Module 2,3 ist seinerseits mit einem bekannten Feldbussystem als Bestandteil der Hardware ausgestattet.

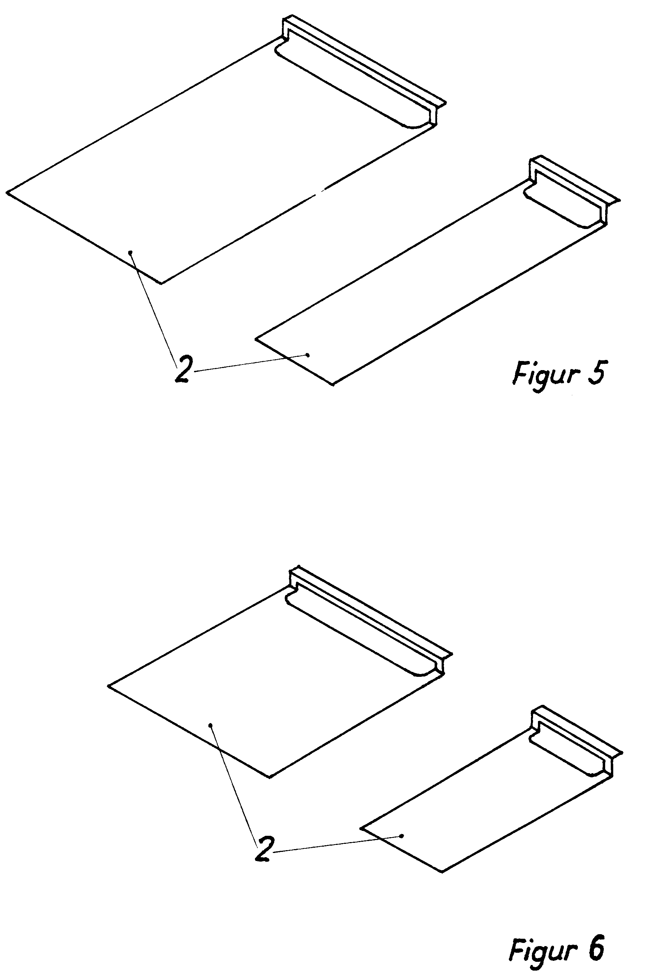

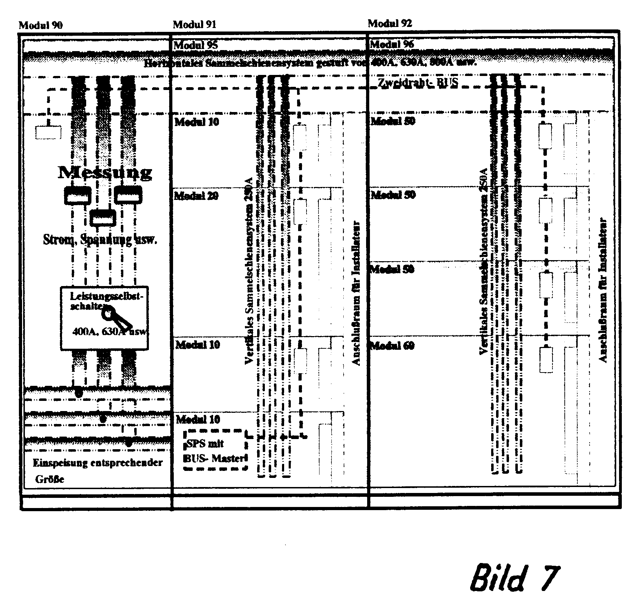

Figur 5 zeigt eine erfindungsgemäße Montageplatte 2 mit einer gemeinsamen Länge/Breite von 970 mm, einmal ausgeführt in der Modulhöhe 550 mm und zum zweiten ausgeführt in der Modulhöhe 270 mm.

Figur 6 zeigt zwei weitere Montageplatten 2 der Modulhöhen 550 und 270 mm, diesmal mit einer gemeinsamen Länge/Breite von 590 mm.

Bild 7 zeigt eine prizipielle Darstellung des erfinderischen elektrischen Schaltschrankes in Modulbauweise mit den eingebauten Modulen und den Sammelschienen.

## Patentansprüche

1. Elektrischer Schaltschrank in Modulbauweise, dessen Leistungsbaugruppen durch in Serienfertigung hergestellte Modulplatten gebildet werden, **dadurch gekennzeichnet**,
- daß ein solcher, unabhängig von den Maßen der Höhe und Tiefe, aus einem in drei standardisierten Schrankbreitenmaßen, vorrangig in den Nenngrößen 600, 800, 1200 Millimeter, ausgebildeten Gehäuse (1) besteht und daß ein jeder dieser Schaltschränke mehrere durch jeweils eine von vorzugsweise 96 Modulnummern gekennzeichnete, vorgefertigte/vormontierte und jeweils vier Standardhöhen, vorzugsweise 200, 275, 550 Millimeter und Schaltschrankhöhe, aufweisende Modulplatten/Module (2) aufnimmt
- und daß in einem jeden Schaltschrank neben den Modulplatten eine vertikal verlaufende Sammelschiene (3) von 250 A angeordnet ist und daß die Verbindung mit den Leistungsbaugruppen über Stromzangen (4) erfolgt
- und daß das die Module auf intelligente Weise über eine Zweidrahtleitung verbindende und die Verbindung zur technologischen Software herstellende Glied aus einem bekannten, auf dem Markt bewährtem Feldbussystem besteht.
